Europäisches Patentamt

European Patent Office

Office européen des brevets

(11) Veröffentlichungsnummer : **0 090 125**
**B2**

(12) **NEUE EUROPÄISCHE PATENTSCHRIFT**

(45) Veröffentlichungstag der neuen Patentschrift :
06.07.88

(21) Anmeldenummer : 83100048.4

(22) Anmeldetag : 05.01.83

(51) Int. Cl.⁴ : **C 09 C  1/30**, C 09 C   3/12

(54) **Verfahren zur Hydrophobierung von pyrogen hergestelltem Siliciumdioxid.**

(30) Priorität : 27.03.82 DE 3211431

(43) Veröffentlichungstag der Anmeldung :
05.10.83 Patentblatt 83/40

(45) Bekanntmachung des Hinweises auf die Patenterteilung : 03.04.85 Patentblatt 85/14

(45) Bekanntmachung des Hinweises auf die Entscheidung
über den Einspruch : 06.07.88 Patentblatt 88/27

(84) Benannte Vertragsstaaten :
BE CH DE FR GB IT LI NL

(56) Entgegenhaltungen :
DE-B- 1 150 955
DE-B- 1 163 784

(73) Patentinhaber : Degussa Aktiengesellschaft
Weissfrauenstrasse 9
D-6000 Frankfurt am Main 1 (DE)

(72) Erfinder : Klebe, Hans, Dr.
Ernst-Reuter-Strasse 6
D-7888 Rheinfelden (DE)
Erfinder : Koth, Detlev, Dr.
Karlesberg 8
D-8752 Mömbris (DE)
Erfinder : Kerner, Dieter, Dr.
Ameliastrasse 6
D-6450 Hanau (DE)
Erfinder : Schmid, Josef
Friedrich-Ebert-Strasse 10
D-7888 Rheinfelden (DE)
Erfinder : Schmid, Manfred
Waldeckstrasse 70
D-7842 Kandern 1 (DE)

EP 0 090 125 B2

## Beschreibung

Die Erfindung betrifft ein Verfahren zur Hydrophobierung von pyrogen hergestelltem Siliciumdioxid, vorzugsweise in direktem Verbund mit dem Herstellverfahren des pyrogenen Siliciumdioxides aus einer Siliciumhalogenverbindung.

Es ist gemäß DE-PS 11 63 784 bekannt, pyrogen hergestelltes Siliciumdioxid mit Dimethyldichlorsilan im Wirbelbett zu hydrophobieren.

Die einzelnen Komponenten werden gemäß dem Verfahrensschema dieser Druckschrift derart miteinander vermischt, daß man Wasserdampf im Gemisch mit Stickstoff mit dem pyrogen hergestellten Siliciumdioxid vermischt. Anschliessend wird diesem feuchten Siliciumdioxid ein Gasgemisch, bestehend aus Dimethyldichlorsilan und Stickstoff zugeführt. Die eigentliche Hydrophobierungsreaktion erfolgt nachfolgend in einem Wirbelbettreaktor.

Diese Verfahrensweise weist den Nachteil auf, daß auf Grund des Feuchtigkeitsgehaltes des pyrogen hergestellten Siliciumdioxides die Rohrleitungen der Hydrophobierungsvorrichtung zugesetzt werden.

Weiterhin entstehen hohe Ausbeuteverluste und unerwünschte Nebenprodukte durch die teilweise Reaktion des Organohalogensilans mit dem Wasserdampf auf dem pyrogen hergestellten Siliciumdioxid bevor die Hydrophobierungsreaktion unter kontrollierten Bedingungen in dem Wirbelbett-Reaktor durchgeführt werden kann.

Ein weiterer Nachteil des bekannten Verfahrens gemäß DE-PS 11 63 784 ergibt sich aus der spezifischen Zusammensetzung des Abgases der Hydrophobierungsreaktion. Es besteht aus hydrophobiertem pyrogen hergestelltem Siliciumdioxid, überschüssigem Organohalogensilan, Chlorwasserstoff, wenn beispielsweise als Organohalogensilan Dimethyldichlorsilan umgesetzt wird, Stickstoff und Wasserdampf.

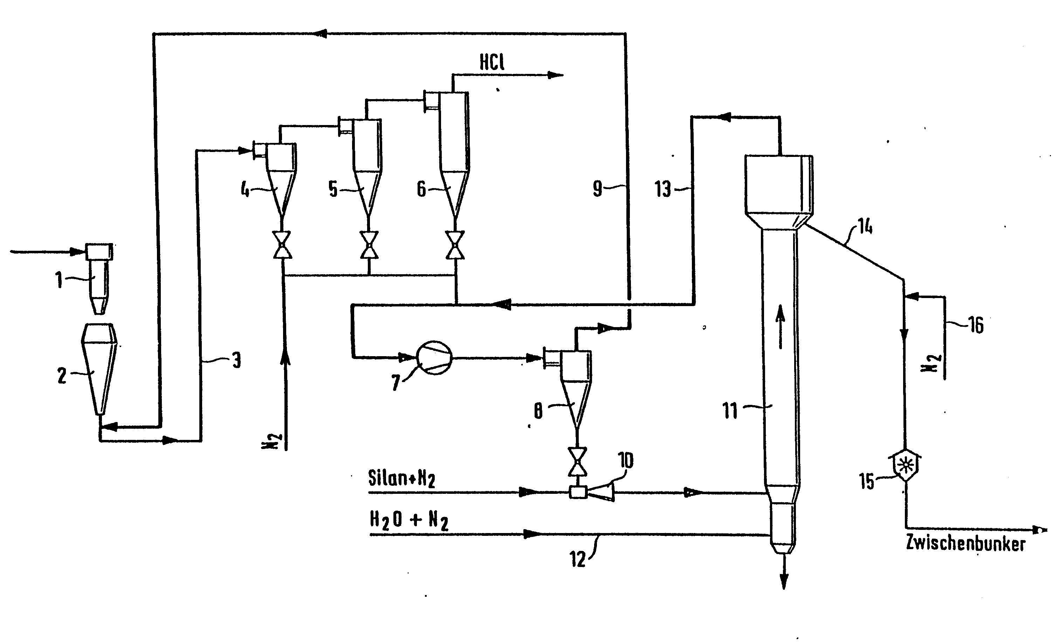

Durch die in der Zeichnung der DE-PS 11 63 784 beschriebene Abgasrückführung wird hydrophobes Siliciumdioxid in die Chlorwasserstoff-Absorptionsvorrichtung geleitet. Dadurch tritt eine unerwünschte Schaumbildung auf.

Durch Polymerisationsreaktionen des Organohalogensilans werden die Abgasleitungen zugesetzt. Es treten dadurch Störungen in der Anlage, wie Druckverlust und Brände, auf.

Bei dem Versuch, dieses Abgas mittels Wasserwäsche in einem Kühlturm aufzuarbeiten, tritt eine starke Schaumbildung in dem Abwasser auf. Dieser Schaum wird in dem Kühlturm umgewälzt, wobei es durch die hydrophobe pyrogen hergestellte Siliciumdioxid zur Bildung von « trockenem Wasser » kommt. Ein Abfiltrieren dieses Schaumes ist nicht möglich, weil die Filter zu schnell zugesetzt werden.

Gegenstand der Erfindung ist ein Verfahren zur Hydrophobierung von aus Siliciumhalogenverbindungen pyrogen hergestelltem Siliciumdioxid mittels Organohalogensilan im Wirbelbett, welches dadurch gekennzeichnet ist, daß man direkt nach der Abtrennung des Halogenwasserstoffes im Anschluß an die pyrogene Herstellung das, gegebenenfalls noch Reaktionsabgase mit sich führende, Siliciumdioxid mit Inertgas vermischt, mittels einer Abscheidevorrichtung das Siliciumdioxid von den mitgeführten Gasen befreit, diese Gase in die Kühlstrecke der Herstellvorrichtung einführt, das von den Gasen befreite Siliciumdioxid zuerst mit dem Organohalogensilan und Inertgas vermischt, und dem Wirbelbettreaktor zuführt, gleichzeitig über eine separate Leitung ein Gemisch aus Wasserdampf und Inertgas dem Wirbelbettreaktor zuführt, das Siliciumdioxid-, Organohalogensilan- und Inertgas-Gemisch anschliessend mit dem Wasserdampf- Inertgas-Gemisch vermischt, anschliessend die Hydrophobierungsreaktion in bekannter Weise in einem Wirbelbettreaktor durchführt, und die Abgase der Hydrophobierungsreaktion in die Abscheidevorrichtung zurückführt.

Die Hydrophobierungsreaktion kann bei Temperaturen von 400 bis 600 °C, vorzugsweise von 500 bis 600 °C durchgeführt werden. Besonders gut entsäuertes hydrophobiertes Siliciumdioxid wird bei Temperaturen von 550 bis 580 °C erhalten. Als Hydrophobierungsmittel können bekannte Organohalogensilane verwendet werden. Bevorzugterweise werden Organochlorverbindungen, insbesondere Dimethyldichlorsilan eingesetzt.

In einer bevorzugten Ausführungsform wird das erfindungsgemässe Verfahren in einem Verbundsystem mit dem Verfahren zur Herstellung des pyrogenen Siliciumdioxides durchgeführt, wobei als Ausgangsstoff Siliciumtetrachlorid verwendet werden kann.

In einer Ausführungsform der Erfindung kann man den Durchfluß der Abgasmenge der Hydrophobierungsreaktion mittels automatischer Klappen steuern. Diese Klappen werden vorzugsweise in Form von Drosselklappen verwendet. Dadurch werden Druckstösse ausgeglichen und somit konstante Reaktionsbedingungen und geringere Temperaturschwankungen erzielt.

Das hydrophobierte Siliciumdioxid kann man mittels einer Schleuse, vorzugsweise einer Zellradschleuse, aus dem Fließbett austragen. Hierdurch wird verhindert, daß Sauerstoff in den Hydrophobierungskreislauf gelangt und ein explosives Gemisch mit dem Organohalogensilan bildet.

In einer bevorzugten Ausführungsform der Erfindung kann als Inertgas Stickstoff eingesetzt werden.

Als Abscheidevorrichtung kann vorzugsweise ein Zyklon verwendet werden.

Das erfindungsgemässe Verfahren weist den Vorteil auf, daß es eine wesentlich längere Standzeit der Anlage ermöglicht, weil weniger Verstopfungen der Leitungen auftreten. Da die Nebenreaktionen zurückgedrängt werden, wird ein wesentlich homogeneres Produkt erhalten.

Das Abgas der Hydrophobierungsreaktion wird in das Hydrophobierungsverfahren zurückgeführt, wodurch keine Ausbeuteverluste entstehen. Vielmehr wird eine Ausbeutesteigerung von ca. 3 % erzielt. Das einzige Nebenprodukt bei der Verwendung von beispielsweise Siliciumtetrachlorid als Ausgangsstoff für die Herstellung von Siliciumdioxid und Dimethyldichlorsilan als Hydrophobierungsmittel ist allein Chlorwasserstoff.

Der Aufwand an Organohalogensilan kann reduziert werden, weil das nicht umgesetzte Organohalogensilan zumindest teilweise wieder in das Hydrophobierungsverfahren zurückgeführt wird.

Durch die Vermischung des pyrogen hergestellten Siliciumdioxides mit Inertgas, wie z. B. Stickstoff direkt im Anschluß an das Herstellverfahren wird die Brandgefahr, die durch das Gemisch aus Organohalogensilan und Restsauerstoff aus dem Herstellungsverfahren des Siliciumdioxides bestand, beseitigt. Auf Grund dieser Maßnahme fallen weniger Reparaturkosten an.

Von besonderem Vorteil ist, daß das hydrophobierte Siliciumdioxid vollständig frei von verfärbenden Bestandteilen ist.

Das erfindungsgemäße Verfahren wird an Hand der Zeichnung näher erläutert :

In dem Brenner 1 werden SiCl$_4$. Wasserstoff und Luft zu pyrogenem Siliciumdioxid umgesetzt. Die Reaktionsprodukte, die unter anderem auch Restsauerstoff enthalten, werden von dem Brenner 1 in die Koagulationsstrecke 2 und von dort in die Kühlstrecke 3 geführt. Von dort gelangen die Reaktionsprodukte in die Zyklone 4, 5 und 6, wo die Trennung des festen Siliciumdioxides von den gasförmigen Reaktionsprodukten durchgeführt wird. Das gasförmige Reaktionsproduktgemisch, im wesentlichen Chlorwasserstoff, wird aus dem Zyklon 6 zur Weiterverarbeitung abgeleitet.

Das feste pulverförmige Siliciumdioxid wird mit Stickstoff vermischt und von den Zyklonen 4, 5 und 6 mittels der Fördervorrichtung (Gebläse) 7 in den Zyklon 8 geführt.

Dort erfolgt eine erneute Abtrennung des festen Siliciumdioxides von mitgeführten Gasen. Die Gase werden über die Leitung 9 in die Kühlstrecke 3 zurückgeführt.

Das feste Siliciumdioxid wird anschliessend in dem Injektor 10 mit Dimethyldichlorsilan und Stickstoff vermischt und dem Wirbelbettreaktor 11 zugeführt.

Gleichzeitig wird über die separate Leitung 12 ein Gemisch aus Wasserdampf und Stickstoff dem Wirbelbettreaktor 11 zugeführt. Die Hydrophobierungsreaktion wird in dem Wirbelbettreaktor 11 durchgeführt.

Die Reaktionsabgase, bestehend aus Dimethyldichlorsilan, Chlorwasserstoff, Stickstoff und Wasserdampf, werden über die Leitung 13 zurückgeführt und auf der saugseitigen Leitung der Fördervorrichtung 7 eingeführt.

Das hydrophobierte Siliciumdioxid wird aus dem Wirbelbettreaktor mittels der Leitung 14 ausgetragen und über die Zellradschleuse 15 in der Zwischenbunker geführt.

Zur Verminderung der Brandgefahr wird dabei über die Leitung 16 Stickstoff in die Austragsleitung 14 eingeführt.

Das einzige Produkt, welches neben hydrophoben Siliciumdioxid anfällt, ist Chlorwasserstoff am Zyklon 6.

## Patentansprüche

1. Verfahren zur Hydrophobierung von aus Siliciumhalogenverbindungen pyrogen hergestelltem Siliciumdioxid mittels Organohalogensilanen im Wirbelbett, dadurch gekennzeichnet, daß man direkt nach der Abtrennung des Halogenwasserstoffes im Anschluß an die pyrogene Herstellung das gegebenenfalls noch Reaktionsabgase mitsichführende Siliciumdioxid mit Inertgas, vermischt, mittels einer Abscheidevorrichtung das Siliciumdioxid von den mitgeführten Gasen befreit, diese Gase in die Kühlstrecke der Herstellvorrichtung einführt, das von den Gasen befreite Siliciumdioxid zuerst mit dem Organohalogensilan und Inertgas, vermischt, und dem Wirbelbettreaktor zuführt, gleichzeitig über eine separate Leitung ein Gemisch aus Wasserdampf und Inertgas dem Wirbelbettreaktor zuführt, das Siliciumdioxid-, Organohalogensilan- und Inertgas-Gemisch anschliessend mit dem Wasserdampf- Inertgas-Gemisch vermischt, anschliessend die Hydrophobierungsreaktion in bekannter Weise in einem Wirbelbettreaktor durchführt, und die Abgase der Hydrophobierungsreaktion in die Abscheidevorrichtung zurückführt.

2. Verfahren nach Anspruch 1, dadurch gekennzeichnet, daß man den Durchfluß der Abgasmenge der Hydrophobierungsreaktion mittels automatischer Klappen steuert.

3. Verfahren nach Anspruch 1 oder 2, dadurch gekennzeichnet, daß man das hydrophobierte Siliciumdioxid mittels einer Schleuse aus dem Fließbett austrägt.

4. Verfahren nach den Ansprüchen 1 bis 3, dadurch gekennzeichnet, daß als Siliciumhalogenverbindung Siliciumtetrachlorid eingesetzt wird.

5. Verfahren nach den Ansprüchen 1 bis 4, dadurch gekennzeichnet, daß man als Inertgas Stickstoff einsetzt.

6. Verfahren nach den Ansprüchen 1 bis 5, dadurch gekennzeichnet, daß man als Abscheidevorrichtung ein Zyklon verwendet.

7. Verfahren nach den Ansprüchen 1 bis 6, dadurch gekennzeichnet, daß man als Schleuse eine Zellradschleuse verwendet.

## Claims

1. A process for hydrophobizing silicon dioxide which has been pyrogenically produced from silicon halogen compounds using organo-halosilanes in a fluidized bed, characterised in that immediately after the hydrogen halide has been separated following the pyrogenic production, the silicon dioxide which is optionally still entrained in waste gases from the reaction is mixed with inert gas, the silicon dioxide is freed from the gases in which it is entrained using a separating device, these gases are introduced into the cooling stage of the production apparatus, the silicon dioxide which has been freed from the gases is firstly mixed with the organo-halosilane and inert gas and is fed to the fluidized bed reactor, a mixture of steam and inert gas is simultaneously fed via a separate pipe to the fluidized bed reactor, the silicon dioxide, organo-halosilane and inert gas mixture is then mixed with the steam-inert gas mixture, then the hydrophobizing reaction is carried out in known manner in a fluidized bed reactor and the waste gases from the hydrophobizing reaction are led back into the separating device.

2. A process according to claim 1, characterised in that the throughflow of the quantity of waste gas from the hydrophobizing reaction is controlled by automatic flaps.

3. A process according to claim 1 or 2, characterised in that the hydrophobized silicon dioxide is carried out of the fluidized bed by a sluice.

4. A process according to claims 1 to 3, characterised in that silicon tetrachloride is used as the silicon halogen compound.

5. A process according to claims 1 to 4, characterised in that nitrogen is used as inert gas.

6. A process according to claims 1 to 5, characterised in that a cyclone is used as the separating device.

7. A process according to claims 1 to 6, characterised in that a flow-control wheel in a chamber is used as the sluice.

**Revendications**

1. Procédé pour rendre hydrophobe du dioxyde de silicium produit par voie pyrogénique à partir de composés halogénés du silicium, au moyen d'organohalogénosilanes en lit fluidisé, procédé caractérisé en ce que, directement après la séparation de l'halogénure d'hydrogène, en connexion avec la préparation pyrogénique, le dioxyde de silicium, entraînant encore avec lui éventuellement des gaz de rejet de la réaction, est mélangé avec un gaz inerte, débarrassé des gaz entraînés à l'aide d'un dispositif séparateur, ces gaz sont conduits dans le parcours de refroidissement du dispositif de préparation, le dioxyde de silicium débarrassé des gaz est d'abord mélangé avec l'organohalogénosilane et le gaz inerte et fourni au réacteur à lit turbulent, un mélange de vapeur d'eau et de gaz inerte étant fourni en même temps, par une conduite séparée, au réacteur à lit turbulent, le dioxyde de silicium, l'organohalogénosiloxane et le gaz inerte sont mélangés avec le mélange de vapeur d'eau et de gaz inerte, puis la réaction d'hydrophobisation est effectuée de manière connue en soi dans un réacteur à lit fluidisé, et les gaz de rejet de la réaction d'hydrophobisation sont reconduits dans le dispositif de séparation.

2. Procédé selon la revendication 1, caractérisé en ce que le débit des gaz rejetés par la réaction d'hydrophobisation est commandé par un clapet automatique.

3. Procédé selon les revendications 1 ou 2, caractérisé en ce que le dioxyde de silicium rendu hydrophobe est évacué du lit fluidisé au moyen d'un sas.

4. Procédé selon les revendications 1 à 3, caractérisé en ce que comme composé halogéné du silicium, on utilise le tétrachlorure de silicium.

5. Procédé selon les revendications 1 à 4, caractérisé en ce que comme gaz inerte, on utilise l'azote.

6. Procédé selon les revendications 1 à 5, caractérisé en ce que comme dispositif de séparation, on utilise un cyclone.

7. Procédé selon les revendications 1 à 6, caractérisé en ce que comme sas, on utilise un sas à roue cellulaire.